# EUROPÄISCHE PATENTSCHRIFT

(11) **EP 2 116 699 B1**
(45) Veröffentlichungstag und Bekanntmachung des Hinweises auf die Patenterteilung: **10.08.2016**
(21) Anmeldenummer: 09155941.9
(22) Anmeldetag: 24.03.2009
(51) Int. Cl.: F01N 3/033, F01N 3/28, F01N 13/00

(54) **Abgasbehandlungseinrichtung**
Exhaust gas treatment device
Dispositif de traitement des gaz d'échappement

(30) Priorität: 05.05.2008 DE 102008022081
(43) Veröffentlichungstag der Anmeldung: 11.11.2009
(73) Patentinhaber: Eberspächer Exhaust Technology GmbH & Co. KG, 66539 Neunkirchen (DE)
(72) Erfinder: Werni, Marcus, 71384 Weinstadt-Schnaidt (DE); Sauer, Andreas, 73054 Eislingen (DE)
(74) Vertreter: BRP Renaud & Partner mbB Rechtsanwälte Patentanwälte Steuerberater

(56) Entgegenhaltungen:
- EP-A- 0 953 741
- US-A- 4 730 454
- US-A- 5 212 948
- US-A- 5 396 764
- US-A1- 2004 202 591

## Beschreibung

Die vorliegende Erfindung betrifft eine Abgasbehandlungseinrichtung für eine Abgasanlage einer Brennkraftmaschine, insbesondere eines Kraftfahrzeugs, mit den Merkmalen des Oberbegriffs des Anspruchs 1.

Bei Abgasbehandlungseinrichtungen zur Behandlung größerer Abgasvolumenströme können mehrere Abgasbehandlungselemente parallel durchströmbar in einem Gehäuse angeordnet sein. Dabei können die Abgasbehandlungselemente in einen gemeinsamen Auslassraum einmünden. Von diesem Auslassraum führt nun ein Auslassrohr bzw. ein Auslassstutzen aus dem Gehäuse heraus. Hierbei können sich unterschiedliche Probleme ergeben. Zum einen muss das Rohr am Gehäuse relativ stabil abgestützt sein. Zum anderen sollte von den verschiedenen Abgasbehandlungselementen die Zuströmung zum Auslassrohr bzw. zum Auslassstutzen möglichst gleichförmig verteilt sein. Hier setzt die vorliegende Erfindung an.

Eine gattungsgemäße Abgasbehandlungseinrichtung ist aus der EP 0 953 741 A1 bekannt. Sie umfasst zwei im Gehäuse angeordnete, parallel durchströmbare Abgasbehandlungselemente, einen im Gehäuse angeordneten Auslassraum, in den eines der Abgasbehandlungselemente austrittsseitig einmündet, und wenigstens einen Auslassstutzen, der einen Boden des Gehäuses durchsetzt. Bei der beaknnten Abgasbehandlungseinrichtung sind zwei parallele Abgaspfade vorgesehen, die durch zwei separate Auslassstuzen aus dem Gehäuse herausgeführt sind.

Aus der US 2004/0202591 A1 ist es bekannt, ein Abgasbehandlungselement austrittsseitig über einen Trichterkörper mit einem Auslassstutzen zu verbinden. Dabei können Trichterkörper und Auslassstutzen in einem Innenraum des Gehäuses eine Perforation aufweisen, die von Absorptionsmaterial umschlossen ist, so dass durch die Perforation kein Abgas in den Innenraum einströmen kann.

### Die Erfindung beschäftigt sich mit dem Problem, für eine

Abgasbehandlungseinrichtung der eingangs genannten Art eine verbesserte Ausführungsform anzugeben, die sich insbesondere durch eine kompakte und stabile Bauweise auszeichnet. Gleichzeitig soll eine verbesserte, insbesondere gleichmäßigere Durchströmung der Abgasbehandlungselemente realisiert werden.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, einen im Auslassraum mündenden Auslassstutzen mit einem Trichterkörper auszustatten, der im Auslassraum angeordnet ist und der eine Austrittsseite eines der Abgasbehandlungselemente mit dem Auslassstutzen kommunizierend verbindet. Ferner ist der Trichterkörper mit einem für Abgas durchlässigen Trichtermantel ausgestattet. Durch den abgasdurchlässigen Trichtermantel gelangt auch das aus dem wenigstens einen weiteren Abgasbehandlungselement austretende Abgas in den Trichter und somit zum Auslassstutzen. Durch den Trichterkörper kann zum einen eine intensive Abstützung des Auslassstutzens und somit eine vorteilhafte Aussteifung des Gehäuses realisiert werden. Zum anderen kann durch eine gezielte Gestaltung der Durchströmbarkeit des Trichtermantels die Druckverteilung im Auslassraum dahingehend beeinflusst werden, dass sich insgesamt ein reduzierter Durchströmungswiderstand für die Abgasbehandlungseinrichtung einstellt.

Entsprechend einer vorteilhaften Ausführungsform kann der Trichterkörper einerseits an einem den Auslassraum begrenzenden, von den Abgasbehandlungselementen austrittsseitig durchsetzten Zwischenboden befestigt sein und andererseits am Auslassstutzen und/oder an dem vom Auslassstutzen durchsetzten Boden befestigt sein. Hierdurch schafft der Trichterkörper eine intensive Abstützung des Auslasstrichters am Zwischenboden, was die Festigkeit des Gehäuses im Bereich des Auslassstutzens signifikant erhöht.

Bei einer anderen vorteilhaften Ausführungsform kann der Trichtermantel dadurch für Abgas durchlässig ausgestaltet sein, dass er eine Perforation aufweist und/oder dass er Ausschnitte und/oder Öffnungen aufweist und/oder dass er als Trichtermantelsegment ausgestaltet ist. Die vorgeschlagenen Maßnahmen zur Realisierung der Durchlässigkeit des Trichtermantels für Abgas eignen sich in besonderer Weise zur gezielten Strömungslenkung im Auslassraum, wodurch eine gezielte Druckverteilung im Auslassraum und somit insbesondere an den Austrittsseiten der einzelnen Abgasbehandlungselemente realisierbar ist. Ziel der Auslegung kann es insbesondere sein, an allen Abgasbehandlungselementen etwa den gleichen Durchströmungswiderstand zu erzeugen, um dadurch Abgas möglichst gleichmäßig auf die mehreren Abgasbehandlungselemente zu verteilen. Hierdurch können die durch die mehreren Abgasbehandlungselemente insgesamt zur Verfügung gestellten Oberflächen gleichmäßiger und somit besser ausgenutzt werden. Dies führt insgesamt zu einer erhöhten Effektivität der Abgasbehandlungseinrichtung, wobei gleichzeitig der Durchströmungswiderstand der Abgasbehandlungseinrichtung sinkt.

Gemäß einer vorteilhaften Ausführungsform kann ein zu einem Einlassraum führendes Einlassrohr mit einem sich in Strömungsrichtung aufweitenden durchströmbaren Querschnitt ausgestattet sein. Diese Maßnahme erzeugt eine gewisse Diffusorwirkung, was eine gleichmäßige Druckverteilung im Einlassraum unterstützt. Hierdurch kann die Durchströmung der Abgasbehandlungselemente homogenisiert werden, was eine Absenkung des Durchströmungswiderstands der Abgasbehandlungseinrichtung bewirkt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 und 2: perspektivische Ansichten einer Abgasbehandlungseinrichtung bei weggelassenem Gehäuseboden, bei verschiedenen Ausführungsformen,
- Fig. 3 und 4: perspektivische Ansichten wie in den Fig. 1 und 2, jedoch bei weggelassenem Gehäusemantel, bei weiteren Ausführungsformen,
- Fig. 5 und 6: Längsschnitte der Abgasbehandlungseinrichtung im Bereich eines Einlassrohrs, bei verschiedenen Ausführungsformen.

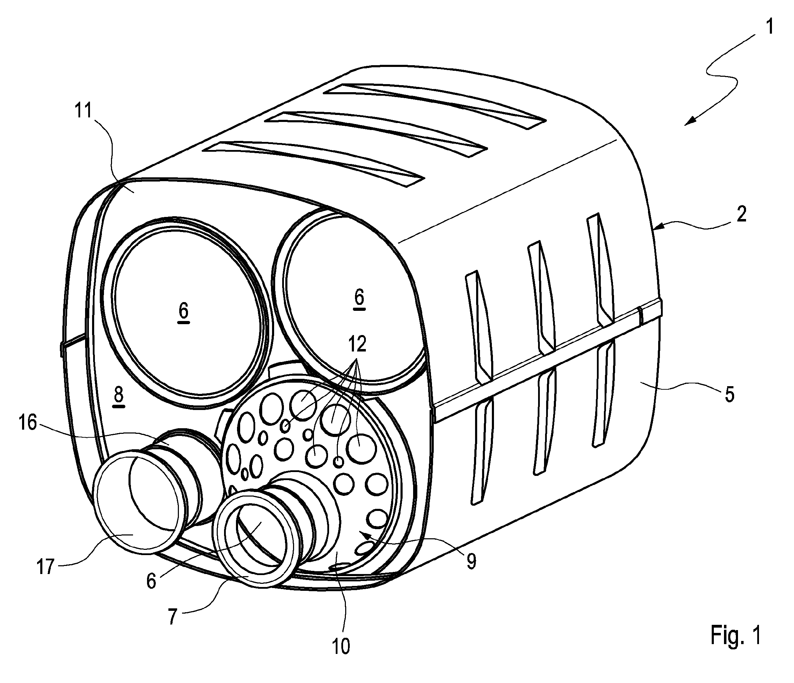

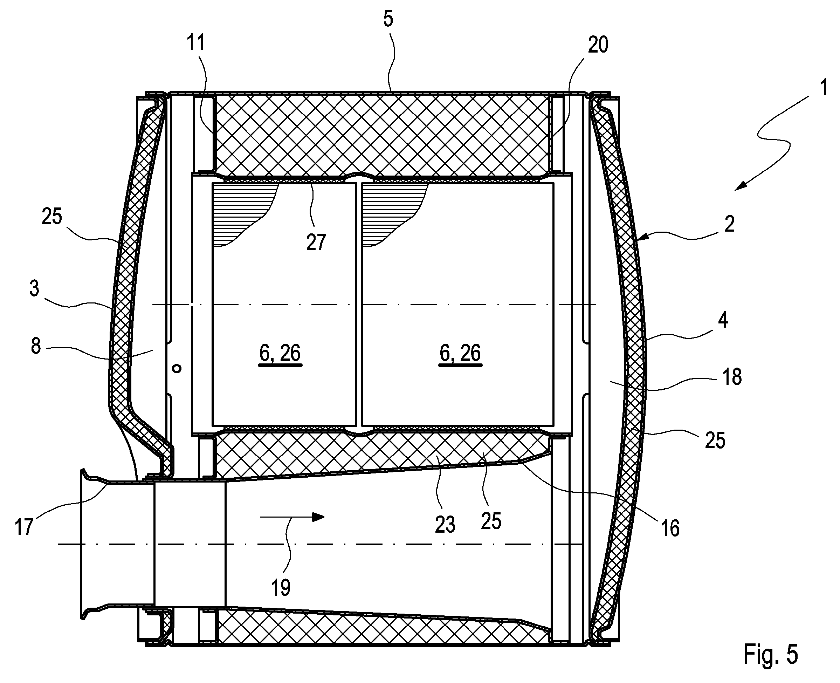

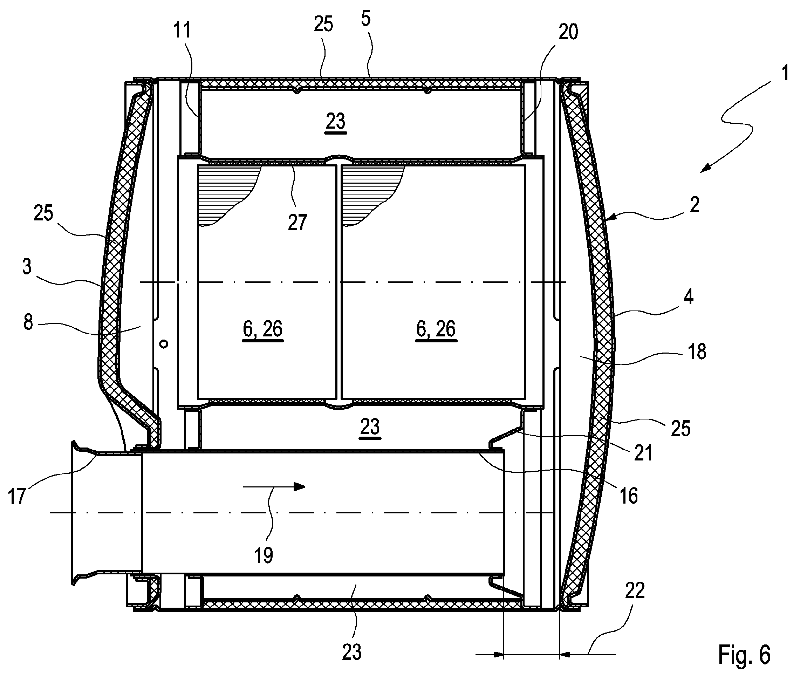

Entsprechend den Fig. 1 bis 6 umfasst eine Abgasbehandlungseinrichtung 1, die bevorzugt bei einer Abgasanlage einer Brennkraftmaschine, insbesondere eines Kraftfahrzeugs, zur Anwendung kommen kann, ein Gehäuse 2, das einen ersten stirnseitigen Boden 3 aufweist, der in den Fig. 1 bis 4 nicht dargestellt ist, sondern nur in den Fig. 5 und 6 dargestellt ist. Ferner weist das Gehäuse 2 einen zweiten stirnseitigen Boden 4 auf, der wieder nur in den Fig. 5 und 6 dargestellt ist. Außerdem weist das Gehäuse 2 einen Mantel 5 auf, der die beiden Böden 3 und 4 miteinander verbindet und der einen nicht näher bezeichneten Innenraum des Gehäuses 2 umschließt.

Die Abgasbehandlungseinrichtung 1 weist mehrere Abgasbehandlungselemente 6 auf. Diese sind im Gehäuse 2 parallel durchströmbar angeordnet. Im Beispiel sind genau drei derartige Abgasbehandlungselemente 6 dargestellt. Ebenso können es mehr oder auch weniger, jedoch mindestens zwei Abgasbehandlungselemente 6 sein. Das Gehäuse 2 ist mit einem Auslassstutzen 7 ausgestattet, der den ersten Boden 3 durchsetzt. Ferner enthält das Gehäuse 2 einen Auslassraum 8, in den zumindest eines der Abgasbehandlungselemente 6 austrittsseitig direkt einmündet. Im Beispiel münden zwei der drei Abgasbehandlungselemente 6 unmittelbar in den Auslassraum 8 ein. Ferner enthält das Gehäuse 2 im Auslassraum 8 einen Trichterkörper 9. Dieser Trichterkörper 9 verbindet eine Austrittsseite eines der Abgasbehandlungselemente 6 mit dem Auslassstutzen 7 kommunizierend. Das heißt, der Trichterkörper 7 schafft eine abgasführende Verbindung von der Austrittsseite des einen Abgasbehandlungselements 6 zum Auslassstutzen 7. Der Trichterkörper 9 weist einen Trichtermantel 10 auf, der für Abgas durchlässig ausgestaltet ist. Somit kann Abgas, das an den Austrittsseiten der anderen Abgasbehandlungselemente 6 in den Auslassraum 8 eintritt vom Auslassraum 8 durch den Trichtermantel 10 das Innere des Trichterkörpers 9 und somit zum Auslassstutzen 7 gelangen.

Zweckmäßig ist der Trichterkörper 9 einerseits an einem Zwischenboden 11 befestigt, der den Auslassraum 8 gegenüber dem ersten Boden 3 begrenzt und der von allen Abgasbehandlungselementen 6 austrittsseitig durchsetzt ist. Andererseits ist der Trichterkörper 9 am Auslassstutzen 7 befestigt. Insbesondere kann der Trichterkörper 9 integral mit dem Auslassstutzen 7 ausgeformt sein. Zusätzlich oder alternativ kann der Trichterkörper 9 an dem vom Auslassstutzen 7 durchsetzten ersten Boden 3 befestigt sein.

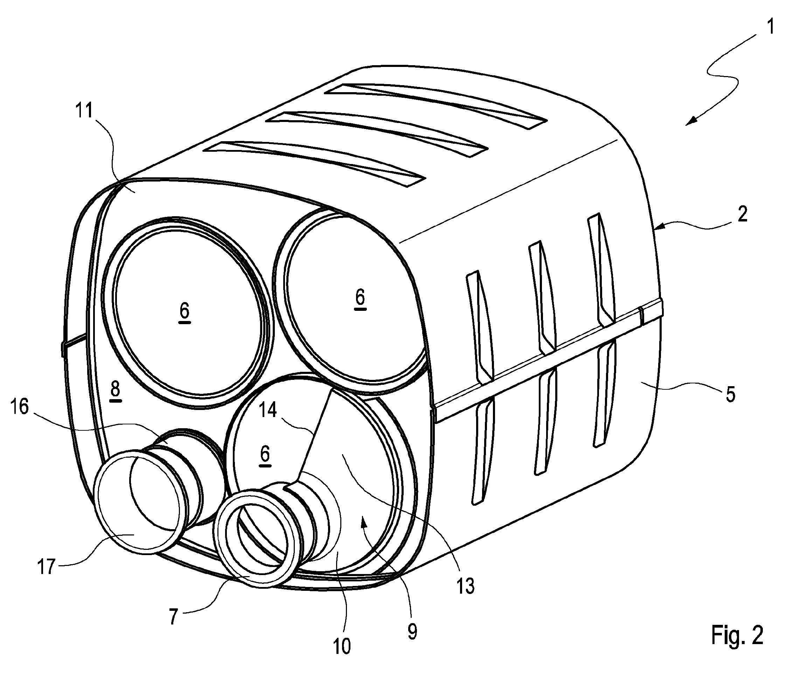

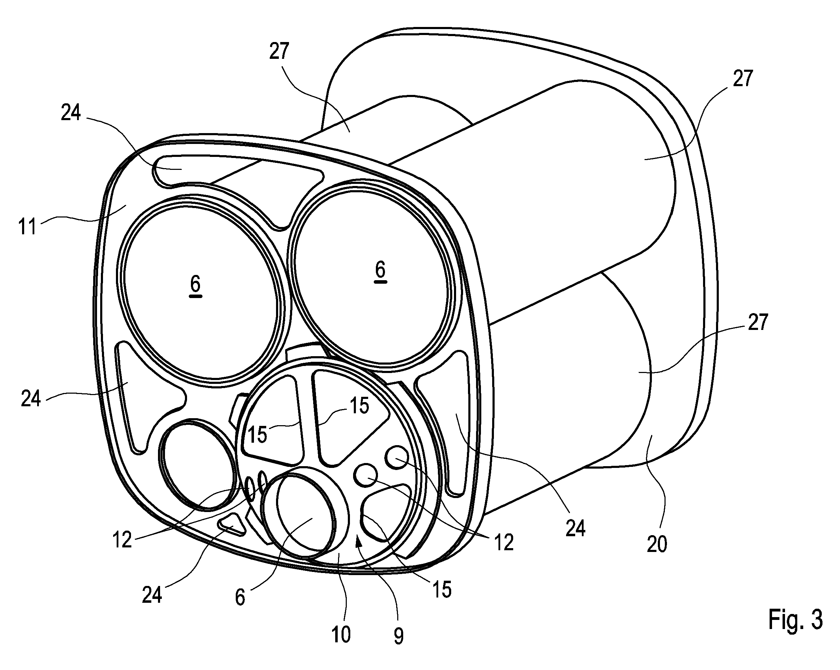

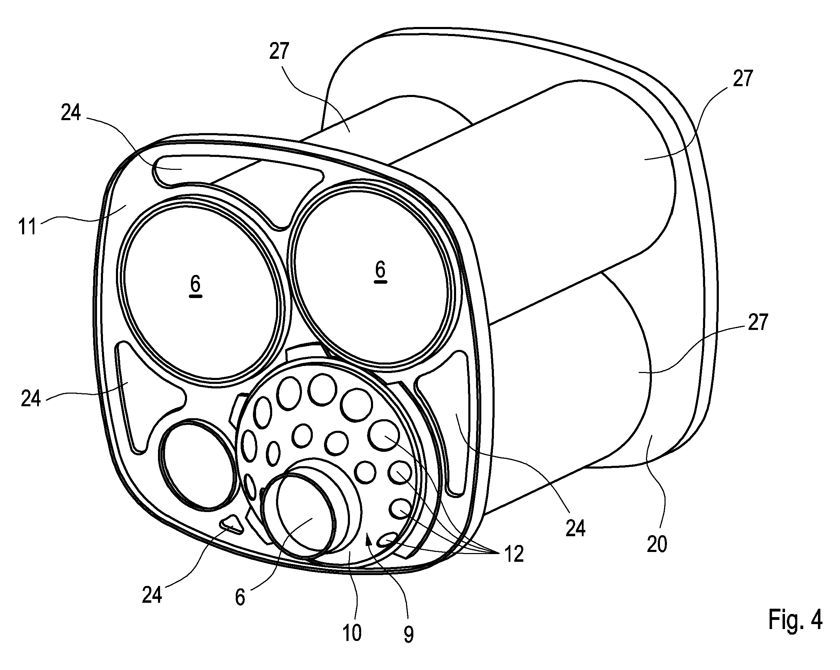

Grundsätzlich kann der Trichtermantel 10 auf beliebige Weise abgasdurchlässig ausgestaltet sein. Beispielsweise kann hierzu eine geeignete Perforation mit einer Vielzahl kleiner Öffnungen vorgesehen sein. Figur 1 zeigt eine Ausführungsform, bei welcher der Trichtermantel 10 mit mehreren, vergleichsweise großen Öffnungen 12 ausgestattet ist, um ihn abgasdurchlässig auszugestalten. Figur 2 zeigt eine Ausführungsform, bei welcher der Trichtermantel 10 als Trichtermantelsegment 13 ausgestaltet ist, wodurch ein Umfangsabschnitt 14 frei oder offen bleibt. Denkbar sind hier grundsätzlich beliebige Teilungen. Beispielsweise kann das Trichtermantelsegment 13 die Hälfte oder mehr des Gesamtumfangs umfassen. Figur 3 zeigt eine Ausführungsform, bei welcher der Trichtermantel 10 mehrere Ausschnitte 15 enthält, um ihn für Abgas durchlässig zu machen. Optional können außerdem auch Öffnungen 12 vorgesehen sein. Figur 4 zeigt wieder eine Ausführungsform mit Öffnungen 12, wobei sich die in Fig. 4 gezeigte Ausführungsform von der in Fig. 1 gezeigten Ausführungsform durch eine unterschiedliche Anordnung sowie durch unterschiedliche Durchmesser der Öffnungen 12 voneinander unterscheiden.

Die Auswahl der Öffnungen 12 bzw. Ausschnitte 15 bzw. des Trichtermantelsegments 13 hinsichtlich Positionierung, Ausrichtung, Größe erfolgt zweckmäßig derart, dass sich im Auslassraum 8 eine gewünschte Druckverteilung einstellt. Hierdurch kann das Abströmverhalten und somit das Durchströmungsverhalten der einzelnen Abgasbehandlungselemente 6 beeinflusst werden.

Das Gehäuse 2 kann außerdem mit einem Einlassrohr 16 ausgestattet sein, das einen Einlassstutzen 17 mit einem ebenfalls im Gehäuse 2 angeordneten Einlassraum 18 kommunizierend verbindet. Einlassrohr 16 und Einlassstutzen 17 sind nur in den Fig. 1, 2, 5 und 6 dargestellt. Der Einlassraum 18 ist nur in den Fig. 5 und 6 erkennbar. Bei der in Fig. 5 gezeigten Ausführungsform besitzt das Einlassrohr 16 einen sich in der durch einen Pfeil angedeuteten Strömungsrichtung 19 aufweitenden durchströmbaren Querschnitt auf. Hierdurch nimmt im Einlassrohr 16 bei der Durchströmung der Druck ab, so dass das Einlassrohr 16 eine gewisse Diffusorwirkung zeigt. Die Druckabsenkung mit Hilfe des sich aufweitenden Einlassrohrs 16 begünstigt eine homogene Verteilung des Abgases auf die Abgasbehandlungselemente 6, die in den Einlassraum 18 eintrittsseitig einmünden.

Ebenso ist jedoch eine Ausführungsform wie in Fig. 6 möglich, bei welcher das Einlassrohr 16 einen in der Strömungsrichtung 19 konstanten durchströmbaren Querschnitt besitzt.

Gemäß Fig. 6 kann im Gehäuse 2 ein weiterer Zwischenboden 20 angeordnet sein, der den Einlassraum 18 gegenüber dem zweiten Boden 4 begrenzt und der von den Abgasbehandlungselementen 6 eintrittsseitig durchsetzt ist. An diesem Zwischenboden 20 ist ein Topfabschnitt 21 ausgeformt, der zum Einlassraum 18 hin offen ist. Das Einlassrohr 16 durchsetzt den Zwischenboden 20 in diesen Topfabschnitt 21. Dabei endet das Einlassrohr 16 innerhalb des Topfabschnitts 21. Durch diese Bauweise kann ein Abstand 22 des Einlassrohrs 16 vom zweiten Boden 4 gegenüber der in Fig. 5 gezeigten Bauweise vergrößert werden. Insgesamt steht dadurch im Einlassraum 18 mehr Volumen zur Verfügung, was die Beruhigung der Strömung im Einlassraum 18 und somit eine gleichmäßige Verteilung des Abgases auf die verschiedenen Abgasbehandlungselemente 6 begünstigt.

Bei den hier gezeigten Beispielen enthält das Gehäuse 2 somit zwei Zwischenböden 11 und 20. An voneinander abgewandten Seiten begrenzen sie zum einen den Auslassraum 8 und zum anderen den Einlassraum 18. An einander zugewandten Seiten begrenzen sie einen Resonanzraum 23. Besagter Resonanzraum 23 kann durch den dem Auslassraum 8 zugeordneten Zwischenboden 11 mit dem Auslassraum 8 kommunizierend verbunden sein. Hierzu kann dieser Zwischenboden 11 gemäß den Fig. 3 und 4 mehrere Aussparungen 24 aufweisen. Ebenso kann der Zwischenboden 11 perforiert ausgestaltet sein.

In den Beispielen der Fig. 5 und 6 sind die beiden stirnseitigen Böden 3 und 4 des Gehäuses 2 jeweils doppelwandig ausgestaltet und mit einem Dämpfungsmaterial 25 befüllt. Im Beispiel der Fig. 6 ist außerdem der Mantel 5 doppelwandig ausgestaltet und mit Dämpfungsmaterial 25 befüllt. Das Dämpfungsmaterial 25 bewirkt zum einen eine schalldämpfende Wirkung, vorzugsweise in einem hochfrequenten Bereich. Zum anderen ermöglicht es auch eine thermische Isolation. Auch der Resonanzraum 23 kann hinsichtlich seines Volumens gezielt so ausgelegt werden, dass Resonanzeffekte und/oder Reflektionseffekte zur Schalldämpfung, bevorzugt im tieffrequenten Bereich nutzbar sind. Bei der in Fig. 5 gezeigten Ausführungsform ist der Mantel 5 nicht doppelwandig ausgestaltet. Dafür ist bei dieser Ausführungsform der Resonanzraum 23 mit Dämpfungsmaterial 25 befüllt, wodurch zusätzlich eine Bedämpfung im hochfrequenten Bereich erzielbar ist.

Die Abgasbehandlungselemente 6 können gemäß den Fig. 5 und 6 durch mehrere, hintereinander angeordnete bzw. nacheinander durchströmbare Abgasbehandlungskörper 26 gebildet sein. Ebenso ist es möglich, die jeweiligen Abgasbehandlungselemente 6 mit Hilfe eines einzigen durchgehenden Abgasbehandlungskörpers zu realisieren. Die Abgasbehandlungselemente 6 sind jeweils in einem Rohrkörper 27 eingesetzt, der die Zwischenwände 11, 20 durchsetzt und zweckmäßig an diesen gehalten ist. Dabei kann zwischen dem Rohrkörper 27 und dem einen Zwischenboden 11, 20 eine feste Verbindung vorliegen, während zwischen dem Rohrkörper 27 und dem anderen Zwischenboden 11, 20 eine axial bewegliche Verbindung vorliegen kann, zum Beispiel in Form eines Schiebesitzes.

Das jeweilige Abgasbehandlungselement 6 kann bspw. ein Oxidationskatalysator sein, und zwar insbesondere ein SCR-Katalysator. Alternativ ist es ebenso möglich, das jeweilige Abgasbehandlungselement 6 als Partikelfilter auszugestalten. Auch sind Kombinationen möglich, wie z.B. ein als katalytisch aktiv beschichtetes Partikelfilter oder ein als Oxidationskatalysator ausgestalteter vorausgehender Abgasbehandlungskörper 26 in Verbindung mit einem als Partikelfilter ausgestalteten nachfolgenden Abgasbehandlungskörper 26.

## Patentansprüche

1. Abgasbehandlungseinrichtung für eine Abgasanlage einer Brennkraftmaschine, insbesondere eines Kraftfahrzeugs, mit einem Gehäuse (2),
- mit mehreren, im Gehäuse (2) angeordneten, parallel durchströmbaren Abgasbehandlungselementen (6),
- mit einem im Gehäuse (2) angeordneten Auslassraum (8), in den zumindest eines der Abgasbehandlungselemente (6) austrittsseitig einmündet,
- mit einem Auslassstutzen (7), der einen Boden (3) des Gehäuses (2) durchsetzt,
**gekennzeichnet durch** einen im Auslassraum (8) angeordneten Trichterkörper (9), der eine Austrittsseite eines der Abgasbehandlungselemente (6) mit dem Auslassstutzen (7) kommunizierend verbindet und dessen Trichtermantel (10) für Abgas durchlässig ausgestaltet ist, so dass auch das aus dem wenigstens einen weiteren Abgasbehandlungselement (6) austretende Abgas **durch** den abgasdurchlässigen Trichtermantel (10) in den Trichterkörper (9) und somit zum Auslassstutzen (7) gelangt.

2. Abgasbehandlungseinrichtung nach Anspruch 1,
**dadurch gekennzeichnet,**
**dass** der Trichterkörper (9) einerseits an einem den Auslassraum (8) begrenzenden, von den Abgasbehandlungselementen (6) austrittsseitig durchsetzten Zwischenboden (11) befestigt ist und andererseits am Auslassstutzen (7) und/oder an dem vom Auslassstutzen (7) durchsetzten Boden (3) befestigt ist.

3. Abgasbehandlungseinrichtung nach Anspruch 1 oder 2,
**dadurch gekennzeichnet,**
**dass** der Trichtermantel (10) dadurch für Abgas durchlässig ist, dass er eine Perforation und/oder Ausschnitte (15) und/oder Öffnungen (12) aufweist und/oder dass er als Trichtermantelsegment (13) ausgestaltet ist.

4. Abgasbehandlungseinrichtung nach einem der vorhergehenden Ansprüche,
**dadurch gekennzeichnet,**
**dass** ein Einlassrohr (16) vorgesehen ist, das einen Einlassstutzen (17) mit einem im Gehäuse (2) angeordneten Einlassraum (18) kommunizierend verbindet und das einen sich in Strömungsrichtung (19) aufweitenden durchströmbaren Querschnitt aufweist.

5. Abgasbehandlungseinrichtung nach einem der Ansprüche 1 bis 4,
**dadurch gekennzeichnet,**
**dass** ein Einlassrohr (16) vorgesehen ist, das einen Einlassstutzen (17) mit einem im Gehäuse (2) angeordneten Einlassraum (18) kommunizierend verbindet, und das einen den Einlassraum (18) begrenzenden Zwischenboden (20) durchsetzt, wobei am Zwischenboden (20) ein zum Einlassraum (18) offener Topfabschnitt (21) ausgeformt ist, in dem das Einlassrohr (16) den Zwischenboden (20) durchsetzt.

6. Abgasbehandlungseinrichtung nach einem der Ansprüche 1 bis 5,
**dadurch gekennzeichnet,**
**dass** im Gehäuse (2) zwei Zwischenböden (11, 20) angeordnet sind, die von den Abgasbehandlungselementen (6) durchsetzt sind und die einen Resonanzraum (23) begrenzen.

7. Abgasbehandlungseinrichtung nach Anspruch 6,
**dadurch gekennzeichnet,**
**dass** der Resonanzraum (23) durch einen der Zwischenböden (11) mit dem Auslassraum (8) kommuniziert.

8. Abgasbehandlungseinrichtung nach einem der Ansprüche 1 bis 7,
**dadurch gekennzeichnet,**
- **dass** stirnseitige Böden (3, 4) des Gehäuses (2) doppelwandig ausgestaltet und mit Dämpfungsmaterial (25) befüllt sind, und/oder
- **dass** ein Mantel (5) des Gehäuses (2) doppelwandig ausgestaltet und mit Dämpfungsmaterial (25) befüllt ist.

9. Abgasbehandlungseinrichtung nach einem der Ansprüche 1 bis 8,
**dadurch gekennzeichnet,**
**dass** das jeweilige Abgasbehandlungselement (6) einen einzigen Abgasbehandlungskörper oder mehrere hintereinander angeordnete Abgasbehandlungskörper (26) besitzt.

10. Abgasbehandlungseinrichtung nach einem der Ansprüche 1 bis 9,
**dadurch gekennzeichnet,**
**dass** das jeweilige Abgasbehandlungselement (6) als Oxidationskatalysator, insbesondere SCR-Katalysator, oder als Partikelfilter ausgestaltet ist.

## Claims

1. Exhaust gas treatment device for the exhaust system of an internal combustion engine, in particular of a motor vehicle, with a body (2)
- with a number of exhaust gas treatment elements (6) arranged in the body (2) such that the flows through them are parallel,
- with an outlet space (8) arranged in the body (2) into which the outlet of at least one the exhaust gas treatment elements (6) discharges,
- with an outlet connection stub (7) that passes through an end cover (3) of the body (2), **characterised by** a funnel (9) in the outlet space (8) which interconnects one outlet end of the exhaust gas treatment elements (6) and the outlet stub (7), the funnel cone (10) of which is designed as permeable to exhaust gas so that the exhaust gas coming out of at least one further exhaust gas treatment element (6) can pass through the funnel cone (10) permeable to exhaust gas into the funnel (9) and from there onwards to the outlet connection stub (7).

2. Exhaust gas treatment device according to claim 1, **characterised in that** the funnel (9) is fastened at one end to the internal wall (11) bounding one side of the outlet space (8) and penetrated by the exhaust gas treatment elements (6), and at the other end to the outlet connection stub (7) and/or the end cover (3) penetrated by the outlet connection stub (7).

3. Exhaust gas treatment device according to claim 1 or 2, **characterised in that** the funnel cone (10) is permeable to exhaust gas inasmuch as it is has perforations and/or cut-outs (15) and/or openings (12), and/or is designed as a cone segment (13).

4. Exhaust gas treatment device according to any of the above claims, **characterised in that** an inlet pipe (16) interconnects an inlet connection stub (17) and an inlet space (18) arranged in the body (2), and its cross-section, through which the flow passes, increases in the direction of flow (19).

5. Exhaust gas treatment device according to any of claims 1 to 4, **characterised in that** an inlet pipe (16) interconnects an inlet connection stub (17) and an inlet space (18) arranged in the body (2), and passes through an internal wall (20) bounding the inlet space (18), whereby a cup section (21) open to the inlet space (18) is formed at the internal wall (20) by the inlet pipe (16) passing through the internal wall (20).

6. Exhaust gas treatment device according to any of claims 1 to 5, **characterised in that** two internal walls (11, 20) through which the exhaust gas treatment elements (6) pass and which bound a resonance space (23), are arranged in the body (2).

7. Exhaust gas treatment device according to claim 6, **characterised in that** the resonance space (23) interconnects one of the internal walls (11) and the outlet space (8).

8. Exhaust gas treatment device according to any of claims 1 to 7, **characterised in that** - the end covers (3 ,4) of the body (2) are designed as double-walled and filled with damping material (25), and/or
- a casing (5) of the body (2) is designed as double-walled and filled with damping material (25).

9. Exhaust gas treatment device according to any of claims 1 to 8, **characterised in that** each exhaust gas treatment element (6) consists of a single exhaust gas treatment element or several exhaust gas treatment elements arranged sequentially (26).

10. Exhaust gas treatment device according to any of claims 1 to 9, **characterised in that** each exhaust gas treatment element (6) is designed as an oxidation-type catalytic converter, in particular an SCR catalytic converter, or a particle filter.

## Revendications

1. Dispositif de traitement de gaz d'échappement pour une installation de gaz d'échappement d'un moteur à combustion interne, en particulier d'un véhicule automobile, comprenant un boîtier (2),
- comprenant plusieurs éléments de traitement de gaz d'échappement (6) disposés dans le boîtier (2), pouvant être parcourus de manière parallèle,
- comprenant un espace d'évacuation (8) disposé dans le boîtier (2), dans lequel débouche au moins un des éléments de traitement de gaz d'échappement (6) côté sortie,
- comprenant une tubulure d'évacuation (7), qui traverse un fond (3) du boîtier (2), **caractérisé par** un corps de trémie (9) disposé dans l'espace d'évacuation (8), lequel relie de manière communicante un côté de sortie d'un des éléments de traitement de gaz d'échappement (6) à la tubulure d'évacuation (7) et dont l'enveloppe de trémie (10) est configurée de manière perméable aux gaz d'échappement de sorte que le gaz d'échappement sortant de l'autre élément de traitement de gaz d'échappement (6) au moins au nombre de un parvient également par l'enveloppe de trémie (10) perméable aux gaz d'échappement dans le corps de trémie (9) et, ce faisant, à la tubulure d'évacuation (7).

2. Dispositif de traitement de gaz d'échappement selon la revendication 1,
**caractérisé en ce**
**que** le corps de trémie (9) est fixé d'une part au niveau d'un fond intermédiaire (11) délimitant l'espace d'évacuation (8), traversé côté sortie par les éléments de traitement de gaz d'échappement (6) et est fixé d'autre part au niveau de la tubulure d'évacuation (7) et/ou au niveau du fond (3) traversé par la tubulure d'évacuation (7).

3. Dispositif de traitement de gaz d'échappement selon la revendication 1 ou 2,
**caractérisé en ce**
**que** l'enveloppe de trémie (10) est perméable aux gaz d'échappement du fait qu'elle présente une perforation et/ou des découpes (15) et/ou des ouvertures (12), et/ou en ce qu'elle est configurée sous la forme d'un segment d'enveloppe de trémie (13).

4. Dispositif de traitement de gaz d'échappement selon fune quelconque des revendications précédentes,
**caractérisé en ce**
**qu'**un tuyau d'admission (16) est prévu, lequel relie de manière communicante une tubulure d'admission (17) à un espace d'admission (18) disposé dans le boîtier (2) et qui présente une section transversale pouvant être traversée s'élargissant dans la direction d'écoulement (19).

5. Dispositif de traitement de gaz d'échappement selon l'une quelconque des revendications 1 à 4,
**caractérisé en ce**
**qu'**est prévu un tuyau d'admission (16), qui relie de manière communicante une tubulure d'admission (17) à un espace d'admission (18) disposé dans le boîtier (2) et qui traverse un fond intermédiaire (20) délimitant l'espace d'admission (18), une section de pot (21) ouverte en direction de l'espace d'admission (18) étant formée au niveau du fond intermédiaire (20), dans laquelle section de pot le tuyau d'admission (16) traverse le fond intermédiaire (20).

6. Dispositif de traitement de gaz d'échappement selon l'une quelconque des revendications 1 à 5,
**caractérisé en ce**
**que** sont disposés dans le boîtier (2) deux fonds intermédiaires (11, 20), qui sont traversés par les éléments de traitement de gaz d'échappement (6) et qui délimitent un espace de résonnance (23).

7. Dispositif de traitement de gaz d'échappement selon la revendication 6,
**caractérisé en ce**
**que** l'espace de résonnance (23) communique avec l'espace d'évacuation (8) par l'un des fonds intermédiaires (11).

8. Dispositif de traitement de gaz d'échappement selon l'une quelconque des revendications 1 à 7,
**caractérisé en ce**
- **que** des fonds (3, 4) côté frontal du boîtier (2) sont configurés sous une forme à double paroi et sont remplis d'un matériau d'amortissement (25), et/ou
- en ce qu'une enveloppe (5) du boîtier (2) est configurée sous une forme à double paroi et est remplie d'un matériau d'amortissement (25).

9. Dispositif de traitement de gaz d'échappement selon l'une quelconque des revendications 1 à 8,
**caractérisé en ce**
**que** l'élément de traitement de gaz d'échappement (6) respectif possède un unique corps de traitement de gaz d'échappement ou plusieurs corps de traitement de gaz d'échappement (26) disposés les uns derrière les autres.

10. Dispositif de traitement de gaz d'échappement selon l'une quelconque des revendications 1 à 9,
**caractérisé en ce**
**que** l'élément de traitement de gaz d'échappement (6) respectif est configuré sous la forme d'un catalyseur d'oxydation, en particulier d'un catalyseur de type SCR (à réduction catalytique sélective), ou sous la forme d'un filtre à particules.
